Europäisches Patentamt

European Patent Office

Office européen des brevets

(19)

(11) Publication number: **0 684 268 A1**

## EUROPEAN PATENT APPLICATION

(12)

(21) Application number: **94201393.9**

(22) Date of filing: **18.05.94**

(51) Int. Cl.6: **C08G 59/18**, C08G 59/62, C08L 63/00

(43) Date of publication of application:
**29.11.95 Bulletin 95/48**

(84) Designated Contracting States:
**NL**

(71) Applicant: **Akzo Nobel N.V.**
**Velperweg 76**
**NL-6824 BM Arnhem (NL)**

(72) Inventor: **Raymond, William René Eduard**
**Hinter dem Hof 11**
**D-52372 Kreuzau-Leversbach (DE)**

(74) Representative: **Schalkwijk, Pieter Cornelis et al**
**Akzo Nobel N.V.**
**Patent Department**
**P.O. 9300**
**NL-6800 SB Arnhem (NL)**

(54) **Low temperature curing agents for epoxy resins.**

(57) A process for making a low temperature hardener for curing epoxy resins which comprises the steps of A) reacting a Mannich base with a compound selected from the group consisting of (poly)aminoamides, (poly)-amines, (poly)aminoimidazolines, and (poly)aminoamides containing an imidazoline group, to form an amine compound reaction product which contains an average of more than two active hydrogen atoms per molecule, and B) adducting the amine compound obtained from step (A) with a first compound which contains at least 1.5 reactive groups per molecule and with a second compound which contains 0.7-1.2 reactive groups per molecule, said first and second compounds being independently selected from the group consisting of compounds that contain as reactive groups, groups that can adduct with primary or secondary amine functionalities, is disclosed. Also disclosed is the use of this hardener to cure epoxy resins.

EP 0 684 268 A1

The present invention relates to a process for making low temperature curing agents for epoxy resins and to epoxy resin hardeners produced by the process. In particular, the present invention relates to a process for the production of hardening agents which are adducts of (poly)epoxides with the reaction products of Mannich bases with a compound selected from (poly)aminoamides, (poly)amines, (poly)-aminoimidazolines, and (poly)aminoamides containing an imidazoline group, to the hardening agents themselves and to the use of the hardening agents in the curing of epoxy resins.

Typical commercial hardeners for epoxy resins are accelerated amines and polyaminoamides. However, the accelerated amines suffer from the disadvantage that they contain free phenol and thus can be considered toxic. The polyaminoamides do not suffer from this problem but are limited to curing at temperatures at least above 10°C since otherwise incomplete curing takes place. Further, the polyaminoamides form cloudy, tacky surfaces when employed as epoxy curing agents under conditions of high relative humidity.

Thus, it is an object of the present invention to provide an epoxy resin curing agent which permits tack-free curing at low temperatures and high relative humidities, and which does not contain free phenol. In this regard, U.S. patent 4,269,742 proposes to employ hardening agents which are the reaction products of Mannich bases prepared from formaldehyde, phenols and secondary amines, with aminoamides, aminoimidazolines, imidazoline-containing aminoamides and/or polyamines with amine exchange and the splitting off of secondary amine. These products may optionally be adducted with a glycidyl compound in order to modify their properties for specific applications as is demonstrated in examples 13-14 of this U.S. patent. However, the specific, two-step adduction process of the present invention is neither taught nor suggested by this patent.

The products of U.S. patent 4,269,742 are specifically designed for application in solvent-free systems. When tested in solvent-containing epoxy resin systems it was found that these products suffered from the disadvantage that they produced tacky coatings, probably due to elution of solvent towards the surface of the coating.

Accordingly, it is a further object of the present invention to provide an epoxy hardener which can be universally applied in both solvent-free systems and solvent-containing systems without the attendant disadvantage of the prior art that a tacky coating is obtained in a solvent-containing system. These and other objects of the present invention will be apparent from the detailed description which follows.

In a first aspect, the present invention relates to a process for making a low temperature hardener for curing epoxy resins which comprises the steps of:

A) reacting a Mannich base with a compound selected from the group consisting of (poly)aminoamides, (poly)amines, (poly)aminoimidazolines, and (poly)aminoamides containing an imidazoline group, to form an amine compound reaction product which contains an average of more than two active hydrogen atoms per molecule, and

B) adducting the amine compound obtained from step (A) with a first compound which contains at least 1.5 reactive groups per molecule and with a second compound which contains 0.7-1.2 reactive groups per molecule, said first and second compounds being independently selected from the group consisting of compounds that contain as reactive groups, groups that can adduct with primary or secondary amine functionalities; with the proviso that the step of adducting with said second compound can be carried out prior to, concurrent with, or subsequent to said step of adducting with said first compound.

The present invention also relates to a low temperature hardening agent for the curing of epoxy resins which is the product of the above-mentioned process and to the use of this product as a hardening agent for the curing of epoxy resins.

Step (A) of the process of the present invention is a conventional reaction that is described in detail in U.S. patent 4,269,742, the relevant disclosure of which is hereby incorporated by reference.

In general terms, the Mannich base is a reaction product of the reaction of formaldehyde with a phenol compound and a secondary amine. A comprehensive enumeration of the phenols and secondary amines which can be employed to produce the Mannich base can be found in M. Tramatini, Synthesis 1973, page 703, the relevant disclosure of which is hereby incorporated by reference.

The Mannich bases which are preferred for use in the process of the present invention are the reaction products of formaldehyde with phenol, nonylphenol or bisphenol A, and a dialkylamine such as dimethylamine, diethylamine or dipropylamine. Dimethylamine is the most preferred dialkylamine for preparing the Mannich base. Of course, mixtures of one or more of the individual components may also be employed (i.e. a mixture of diethylamine and dipropylamine). The most preferred Mannich bases for use in the present invention are those having 1-4 tertiary amine groups per molecule, although when using a novolak as the phenolic component, Mannich bases having up to 10 tertiary amine groups per molecule can be obtained.

2,4,6-tris(dimethylaminomethyl)phenol is the most preferred Mannich base for use in the present invention.

In step (A) of the reaction, the Mannich base is reacted with a compound selected from (poly)-aminoamides, (poly)amines, (poly)aminoimidazolines, (poly)aminoamides containing an imidazoline group, and mixtures thereof, to form an amine compound reaction product which contains an average of more than two active hydrogen atoms per molecule. A detailed listing of these types of compounds and how they are prepared can be found in U.S. patent 4,269,742 referred to above.

It is advantageous to employ aminoamides, aminoimidazolines and aminoamides containing imidazoline groups which are prepared by reacting polyamines, with a carboxylic acid component using a stoichiometric excess of amine groups to carboxylic acid groups. Of course, mixtures of two or more amines and/or carboxylic acids may be employed to make these compounds. Preferred compounds include diethylenetriamine, N-aminoethylpiperazine and N-oleyl-1,3-diaminopropane.

For the purpose of the present application prefixes appearing between brackets should be interpreted as follows. The word, "(poly)amines" should be read as meaning, "amines and/or polyamines." Further, with respect to the compounds which are to be reacted with Mannich bases, the present invention also encompasses the use of any glycidyl adducts of these compounds such as are known from, for example, U.S. patent 2,970,971 and published German patent applications 1,494,524 and 1,520,918.

The amount of the compound to be reacted with the Mannich base is selected such that the reaction product of step (A) of the process of the present invention contains an average of more than two active amine hydrogen atoms per molecule. The amine-exchange reaction of step (A) can be conducted by heating the components, preferably with agitation, to temperatures of at least 100°C and, more preferably, 130-180°C, with temperatures of 170-180°C being required for the (poly)aminoamides.

The reaction conditions should be carefully monitored in order to minimize polymerization during reaction step (A). The secondary amine liberated by this reaction is distilled into a cooled receiver and thus removed from the reaction mixture. Typically, 0.7-1.5 moles of the compound are employed per amine equivalent in said Mannich base, and, more preferably, 0.9-1.1 moles per amine equivalent are used.

In step (B) of the process of the present invention, the amine compound obtained from step (A) is adducted with two different compounds containing reactive groups which can adduct with primary and or secondary amine functionalities. One of the compounds should contain at least 1.5 reactive groups per molecule and the other should contain 0.7-1.2 reactive groups per molecule.

The compounds containing at least 1.5 reactive groups per molecule more preferably contain 1.8-2.2 reactive groups per molecule. These compounds may be selected from, for example, polyacrylates, polymethacrylates, polyepoxides, free polyisocyanates, blocked polyisocyanates and mixtures thereof. These compounds are known to the man of skill in the art. In this reaction, 0.8-1.6 moles of the amine compound obtained from step (A) per reactive group are employed. More preferably, 0.9-1.3 moles of amine from step (A) per reactive group are used.

Examples of polyacrylates and polymethacrylates include triethylene glycol dimethacrylate, ethylene glycol dimethacrylate, tetraethylene glycol dimethacrylate, polyethylene glycol dimethacrylate, 1,3-butylene glycol diacrylate, diethylene glycol diacrylate, diethylene glycol dimethacrylate, 1,6-hexanediol diacrylate, 1,6-hexanediol dimethacrylate, neopentyl glycol diacrylate, polyethylene glycol diacrylate, tetraethylene glycol diacrylate, 1,3-butylene glycol dimethacrylate, tripropylene glycol diacrylate, ethoxylated bisphenol A dimethacrylate and ethoxylated bisphenol A diacrylate.

Examples of polyisocyanates are 2,4-toluene diisocyanate, a mixture of 2,4- and 2,6-toluene diisocyanate, diphenyl methane diisocyanate, bis(4-isocyanato cyclohexyl)methane, isophorone diisocyanate, 1,3-bis(isocyanato methyl)cyclohexane, 1,4-bis(isocyanato methyl) cyclohexane and hexamethylene diisocyanate.

More preferably, the reactive group-containing compounds are epoxides which contain as reactive groups, terminal 1,2-epoxide groups, such as the diglycidylethers and their derivatives. Examples of such epoxides can be found in, for example, "Epoxidverbindungen und Epoxidharze," by A.M. Paquin, Springer-Verlag, Chapter IV, (1958); "Epoxy Resins," May and Tanaka, Marcel-Dekker, Chapter II, (1973); and "Handbook of Epoxy Resins," Lee and Neville, Chapter 2, (1968).

The most preferred (poly)epoxides for use in the process of the present invention are products obtained by reacting epichlorhydrin with 2,2-bis(4-hydroxyphenyl)propane or with bis(2-hydroxyphenyl)methane and mixtures thereof, diepoxides such as bisphenol A, bisphenol F, butanediol diglycidylether, hexanediol diglycidylether, neopentanediol diglycidylether, resorcinol diglycidylether and polypropyleneglycol diglycidylether, and polyepoxides having an average molecular weight of 300-2000 such as the polyglycidyl ethers of polyethylene glycol, polypropylene glycol and polyfurane.

The compounds containing 0.7-1.2 reactive groups per molecule more preferably contain 0.9-1.1 reactive groups per molecule. These compounds may be selected from acrylates, methacrylates, epoxides, free isocyanates, blocked isocyanates and mixtures thereof. These compounds are known to the man of skill in the art. These compounds are employed in an amount sufficient to provide 0.8-1.6 moles of said compound containing 0.7-1.2 reactive groups per molecule, per mole of the amine compound obtained from step (A).

More preferably, these compounds are epoxides which contain as reactive groups, terminal 1,2-epoxide groups, such as monoglycidylethers and their derivatives. Examples of such epoxides are n-butyl glycidylether, allyl glycidylether, cyclohexyl glycidylether, phenyl glycidylether, o-cresyl glycidylether, $C_8$-$C_{10}$ alkyl glycidylether, $C_{12}$-$C_{14}$ alkyl glycidylether, $C_{13}$-$C_{15}$ alkyl glycidylether, para-tertiary-butylphenyl glycidylether, diethyleneglycolbutyl glycidylether and 2-ethylhexyl glycidylether.

Examples of the acrylates and methacrylates which can be employed include methyl (meth)acrylate, ethyl (meth)acrylate, butyl (meth)acrylate, isobutyl (meth)acrylate, hexyl (meth)acrylate, heptyl (meth)-acrylate, 2-ethylhexyl (meth)acrylate, lauryl (meth)acrylate, stearyl (meth)acrylate, isooctyl (meth)acrylate, allyl (meth)acrylate, dimethylaminoethyl (meth)acrylate, nonyl (meth)acrylate, hydroxypropyl (meth)acrylate, methoxyethyl (meth)acrylate, hydroxyethyl (meth)acrylate, tetrahydrofurfuryl (meth)acrylate, cyclohexyl (meth)acrylate, 2-(2-ethoxyethoxy)ethyl (meth)acrylate, 2-phenoxyethyl (meth)acrylate, glycidyl (meth)-acrylate and isodecyl (meth)acrylate.

The adduction of the amine compound obtained from step (A) can be carried out in any order. Thus, the compound having at least 1.5 reactive groups per molecule can be reacted with the amine compound obtained from step (A) prior to, concurrent with or subsequent to the adduction with the compound having 0.7-1.2 reactive groups per molecule. Adduction with the compound having at least 1.5 reactive groups per molecule prior to adduction with the compound having 0.7-1.2 reactive molecules is preferred.

The adduction reaction can optionally be carried out in the presence of a solvent or a diluent. Usually it is preferably to use a mixture of solvents which permits controlled evaporation and drying of the system. Suitable solvents include alcohols such as n-butanol, ethanol, 1-propanol, 2-propanol, 1-butanol, 2-methyl-2-propanol and 2-methyl-4-pentanol, aromatic hydrocarbons such as toluene, xylene, Solvesso® 100 and Shellsol® A, esters such as the ethyl, butyl 2-ethoxyethyl and 2-methoxyethyl esters of acetic acid, hydroxyethers such as methyl glycol, ethyl glycol, butyl glycol, methoxypropanol and ethoxypropanol, and ketones such as di ethyl ketone and methyl isobutyl ketone. When using diisocyanates, hydroxy-functional solvents should be avoided.

Suitable diluents include benzyl alcohol, phthalates such as dioctyl phthalate, high-boiling hydrocarbons such as diisopropyl naphthalene, and other diluents known to those of skill in the art. When the hardener is to be used in solvent-containing systems, it is preferred to introduce a solvent in step B of the process in order to facilitate the handling and reaction of the compounds.

Thus, in the preferred embodiment, the amine compound obtained from step (A) maybe first dissolved in a suitable solvent such as n-butanol. Then, the mixture is heated to 80°C and the first of the reactive-group containing compounds is added, preferably over a one hour period with agitation. Generally, an exotherm develops which results in an increase in the reactor temperature.

Once the addition of the first of the reactive-group containing compounds is completed, the temperature is raised to about 110°C and retained for about one additional hour to give a suitable post-reaction. The solution is then cooled to about 80°C and the second of the reactive-group containing compounds is added over a period of about 1 hour, with agitation. Again, an exotherm is observed and the reaction temperature is raised to 100°C and retained for an additional hour to complete this adduction reaction.

Once the adduction reaction is completed, additional solvent(s) may, optionally be added in order to adjust the solids content of the hardener to the desired level. Suitable solvents include the same solvents as are listed above. Typically, solids contents of 40-100% (100% is without solvent) are desirable and, when solvents are employed, solids contents of 45-80% are more preferred.

The present invention also includes the products of the above-described process both in the form of a solution and solvent-free. In addition, the present invention also includes the use of these hardeners to cure epoxy resins in a conventional manner.

The products of the present invention are useful in the curing of epoxy resins. They have been specifically developed to allow curing at low temperatures down to 0°C and relative humidities of up to 95%. They are preferably formulated in solvent systems and should principally be used to cure solid resin systems which are dissolved in solvent(s), although they are applicable for solvent-free systems and suitable for use with liquid resins. Typical applications include primers and topcoats.

The hardeners of the present invention are used to cure epoxy resins which are ordinary commercial products having more than one epoxy group per molecule. A comprehensive enumeration of these compounds can be found in, for example, "Epoxidverbindungen und Epoxidharze," by A.M. Paquin, Springer-Verlag, Chapter IV, (1958); "Epoxy Resins," May and Tanaka, Marcel-Dekker, Chapter II, (1973); and "Handbook of Epoxy Resins," Lee and Neville, Chapter 2, (1968). Mixtures of two or more epoxy resins can be employed. Glycidyl compounds comprising bisphenol A are preferred. Mixtures of glycidyl compounds with reactive diluents can also be used. The hardeners of the present invention may also be used in combination with conventional hardeners known in the art.

The hardening agents are generally used in approximately equivalent quantities with the epoxy resin. Equivalent quantities means that the number of active amine hydrogen atoms in the hardener is approximately equivalent to the number of reactive epoxy groups in the epoxy resin. It is also possible to use an excess or deficiency of hardener for special applications or when using a co-hardener.

The particular advantage of the hardening agents of the present invention lies in their excellent hardening behavior at temperatures of 0-20°C and relative humidities of up to 95%, combined with the fact that they are applicable in both solvent-free and solvent-containing epoxy resin systems. Of course, this does not preclude the use of these hardeners under more favorable conditions, particularly in combination with conventional hardeners.

Depending on the particular use, it may be desirable to incorporate inorganic additives such as fine sands, talc, silica, alumina, metals or metal compounds in chip or powder form, thixotropic agents, fibrous reinforcement materials such as glass fibers, pigments, flame retardants, solvents, dyestuffs, plasticizers, bitumen and mineral oils into the epoxy resin/hardening agent mixtures.

The invention will now be further illustrated by the following examples.

In the Examples, the following methods were employed.

Amine value was determined by titration with perchloric acid.

Solids content was determined using a gas chromatographic method. The hydrogen equivalent weight was calculated using a mass balance calculation.

The drying time was determined using a BK recorder. In particular, a strip of glass was coated with the epoxy resin system. A metal needle which is pulled at a preset speed was contacted with the epoxy resin system to determine its drying speed. The flow time was defined as the period in which the needle passed through the epoxy system and the channel formed by the needle was completely filled by the epoxy system. The gel time was defined as the period wherein the needle still passed throught the epoxy system but the channel formed by the needle did not completely fill up with the system after the needle had passed through it. The tack-free time was defined as the period when the needle no longer passed through the epoxy system but made a significant imprint therein. The hard dry was defined as the moment when the needle made only a small imprint in the epoxy system when contacted with it. The needle was set to be pulled over the full length of the strip of glass over a 24 hour period.

The Persoz hardness was measured using a Persoz hardness tester. During the first four days, the measurements were carried out in a cold chamber at 5°C and the samples were maintained at this temperature. At 7 days, the samples were removed from the cold chamber, held for one hour at 20°C and then the Persoz measurement was taken. The samples were then stored at 20°C for an additional 7 days and two further hardness measurements were made at 8 and 14 days.

The thicknesses given in the tables are the nominal thicknesses of the applicators. The actual wet thickness is approximately 70% of the nominal value. The dry thickness is dependent on the solids content of the coating employed.

Examples 1-5 and Comparative Examples A-B

In these examples various curing agents were formulated with Epikote® 1001/X75 (a 75% solution of Epikote® 1001 in xylene which was further diluted to a 50% solution using a 1:1 mixture of xylene/ethoxypropanol) and cured. All of the compositions were based on the reaction product of the Mannich base Epilink® 230 [2,4,6-tris(dimethylaminomethyl)phenol] with the amine N-aminoethylpiperazine (N-AEP). The detailed compositions of the curing agent of each example are given below.

Example A - This is the control example using as a curing agent a 100% solids composition of the reaction product of the Mannich base Epilink® 230 with N-AEP. This curing agent composition falls within the broad disclosure of U.S. patent 4,269,742.

Example B - This is the same as Example A except that the reaction product of the Mannich base Epilink® 230 with N-AEP was adducted with the diepoxide Epikote® DX-235 (a mixture of bisphenol A and bisphenol F diglycidylethers). This curing agent composition resembles the composition of Example 14 of U.S. patent 4,269,742. The curing agent was then formulated as a solution in n-butanol with a solids content of 50%.

Example C - This is the same as Example A except that the reaction product of the Mannich base Epilink® 230 with N-AEP was adducted with the diepoxide Epikote® 1001. This curing agent composition resembles the composition of Example 14 of U.S. patent 4,269,742. The curing agent was then formulated as a solution in n-butanol with a solids content of 50%.

Example 1 - To make this curing agent, the curing agent of Example B is further adducted with the monoepoxide para-tertiarybutyl phenyl glycidylether (ptBPGE). The curing agent was then formulated as a solution in n-butanol with a solids content of 50%.

Example 2 - To make this curing agent, the curing agent of Example B is further adducted with the monoepoxide 2-ethylhexyl glycidylether (2-EHGE). The curing agent was then formulated as a solution in n-butanol with a solids content of 50%.

Example 3 - To make this curing agent, the curing agent of Example C is further adducted with the monoepoxide ortho-cresyl glycidylether (OCGE). The curing agent was then formulated as a solution in n-butanol with a solids content of 50%.

Example 4 - To make this curing agent, the curing agent of Example C is further adducted with the monoepoxide ptBPGE. The curing agent was then formulated as a solution in n-butanol with a solids content of 50%.

Example 5 - To make this curing agent, the curing agent of Example C is further adducted with the monoepoxide 2-EHGE. The curing agent was then formulated as a solution in n-butanol with a solids content of 50%.

The results of the curing at 5°C and 90% relative humidity are given in Table 1.

TABLE 1

| Example | A | B | C | 1 | 2 | 3 | 4 | 5 |
|---|---|---|---|---|---|---|---|---|
| **Analytical Results** | | | | | | | | |
| Amine value mgKOH/g | 660 | 307 | 209.4 | 296.3 | 284.4 | 203 | 208.2 | 223.6 |
| Viscosity(Poise) at 25°C | solid | 10.6 | 45.6 | 10.8 | 8.2 | 42.6 | 42.4 | 34.4 |
| % solids | 100 | 50 | 50 | 50 | 50 | 50 | 50 | 50 |
| HEW | 89 | 265.5 | 351 | 358 | 353.4 | 444.4 | 454.8 | 449.2 |
| **DRYING TIME** | | | | | | | | |
| Flow time | 1.5 | 1.6 | 1.2 | 1.3 | 1.3 | 1.8 | 1.6 | 1.5 |
| Gel time | 7 | 5 | 5 | 5.3 | 5.2 | 5.5 | 5.6 | 5 |
| Tack time | 11 | 10 | 9 | 10 | 11.5 | 12 | 12.7 | 11 |
| Hard dry | >24 | 12 | 10 | 12.5 | >24 | 13.5 | 13.5 | 14 |
| **PERSOZ of 150μ film after:** | | | | | | | | |
| 1 day | 61 | 85 | 86 | 77 | 113 | 80 | 82 | 70 |
| 2 days | 154 | 178 | 160 | 162 | 191 | 164 | 160 | 147 |
| 3 days | 211 | 236 | 232 | 210 | 222 | 208 | 200 | 186 |
| 4 days | 218 | 243 | 242 | 219 | 241 | 231 | 228 | 220 |
| 7 days measured at 20°C | 132 | 126 | 141 | 147 | 177 | 134 | 119 | 123 |
| 8 days + 1 day at 20°C | 201 | 198 | 221 | 227 | 236 | 224 | 222 | 212 |
| 14 days + 7 days at 20°C | 310 | 325 | 322 | 326 | 335 | 334 | 327 | 328 |
| **PERSOZ of 225μ film after:** | | | | | | | | |
| 1 day | 40 | 48 | 46 | 36 | 48 | 36 | 34 | 33 |
| 2 days | 98 | 122 | 160 | 91 | 120 | 100 | 97 | 90 |
| 3 days | 158 | 173 | 176 | 134 | 158 | 136 | 132 | 132 |
| 4 days | 164 | 202 | 204 | 158 | 187 | 166 | 164 | 157 |
| 7 days measured at 20°C | 97 | 96 | 122 | 87 | 127 | 91 | 109 | 93 |
| 8 days + 1 day at 20°C | 153 | 183 | 189 | 156 | 183 | 157 | 162 | 152 |
| 14 days + 7 days at 20°C | 285 | 311 | 308 | 291 | 304 | 294 | 311 | 295 |

HEW = Hydrogen Equivalent Weight

Examples 6-10 and Comparative Example D

The curing agent compositions of Examples 1-5 were used to cure Epikote® 1001 at 20°C and 90% relative humidity in Examples 6-10, respectively. Comparative Example D employed the same curing agent as comparative example A and was also cured at 20°C and 90% relative humidity. The results of the curing are given in Table 2.

TABLE 2

| Example | | D | 6 | 7 | 8 | 9 | 10 |
|---|---|---|---|---|---|---|---|
| DRYING TIME | Flow time | 1 | 0.8 | 0.8 | 0.5 | 0.6 | 0.7 |
| | Gel time | 2.3 | 1.3 | 1.3 | 1.4 | 1.4 | 1.4 |
| | Hard Dry | 7 | 5.5 | 5.5 | 5.5 | 5 | 6.5 |
| PERSOZ of 150 $\mu$ film after: | 1 day | 220 | 164 | 168 | 144 | 135 | 122 |
| | 2 days | 243 | 218 | 211 | 198 | 188 | 184 |
| | 4 days | 302 | 283 | 273 | 267 | 265 | 263 |
| | 7 days | 317 | 308 | 300 | 293 | 303 | 291 |
| | 14 days | 328 | 318 | 313 | 308 | 304 | 304 |
| PERSOZ of 225$\mu$ film after: | 1 day | 127 | 77 | 99 | 72 | 80 | 76 |
| | 2 days | 152 | 113 | 144 | 128 | 131 | 131 |
| | 4 days | 227 | 199 | 217 | 201 | 203 | 204 |
| | 7 days | 266 | 252 | 262 | 254 | 255 | 259 |
| | 14 days | 311 | 293 | 306 | 281 | 292 | 292 |

Examples 11-12 and Comparative Example E

In these examples various curing agents were formulated with Epikote® 1001 and cured. All of the compositions were based on the reaction product of the Mannich base Epilink® 230 with the amine diethylenetriamine. The detailed compositions of the curing agent of each example are given below.

Example E        - This is the control example using as a curing agent a 100% solids composition of the reaction product of the Mannich base Epilink® 230 with diethylenetriamine. This curing agent composition falls within the broad disclosure of U.S. patent 4,269,742.

Example 11-     To make this curing agent, the curing agent of Example E is adducted with the monoepoxide 2-EHGE and the diepoxide DX-235. The curing agent was then formulated as a solution in n-butanol with a solids content of 50%.

Example 12-     To make this curing agent, the curing agent of Example E is adducted with the monoepoxide 2-EHGE and the diepoxide Epikote® 1001. The curing agent was then formulated as a solution in n-butanol with a solids content of 50%.

The results of the curing at 5°C and 90% relative humidity are given in Table 3.

TABLE 3

| Example | | E | 11 | 12 |
|---|---|---|---|---|
| Amine value Viscosity(Poise) | mgKOH/g<br>at 25°C<br>% Solids<br>HEW | 1029<br>135<br>100<br>38.7 | 334.7<br>4.4<br>50<br>149.4 | 268.2<br>20.2<br>50<br>183.3 |
| DRYING TIME | Flow time<br>Gel time<br>Tack time<br>Hard dry | 3<br>12.5<br>22<br>>24 | 1.8<br>6.2<br>10<br>16 | 1.3<br>5.5<br>11<br>20 |
| PERSOZ of 150μ film after: | | | | |
| <br><br><br><br>measured at 20°C<br>+ 1 day at 20°C<br>+ 7 days at 20°C | 1 day<br>2 days<br>3 days<br>4 days<br>7 days<br>8 days<br>14 days | 34<br>83<br>132<br>149<br>47<br>100<br>176 | 71<br>152<br>170<br>187<br>95<br>161<br>249 | 74<br>139<br>173<br>195<br>78<br>161<br>-- |
| PERSOZ of 225μ film after | | | | |
| <br><br><br><br>measured at 20°C<br>+ 1 day at 20°C<br>+ 7 days at 20°C | 1 day<br>2 days<br>3 days<br>4 days<br>7 days<br>8 days<br>14 days | 16<br>51<br>83<br>98<br>34<br>75<br>143 | 44<br>97<br>118<br>135<br>79<br>123<br>220 | 39<br>97<br>124<br>140<br>65<br>125<br>230 |

Examples 13-14 and Comparative Example F

The curing agent compositions of Examples 11-12 were used to cure Epikote® 1001 at 20°C and 90% relative humidity in Examples 13-14, respectively. Comparative Example F employed the same curing agent as comparative example E and was also cured at 20°C and 90% relative humidity. The results of the curing are given in Table 4.

TABLE 4

| Example | | F | 13 | 14 |
|---|---|---|---|---|
| DRYING TIME | Flow time<br>Gel time<br>Hard dry | 0.75<br>2.2<br>7.5 | 0.6<br>1.8<br>6 | 0.6<br>1.6<br>5.6 |
| PERSOZ of 150µ film after: | 1 day<br>2 days<br>4 days<br>7 days<br>14 days | 89<br>180<br>259<br>283<br>322 | 140<br>188<br>255<br>275<br>304 | 143<br>167<br>232<br>270<br>306 |
| PERSOZ of 225µ film after | 1 day<br>2 days<br>4 days<br>7 days<br>14 days | 49<br>136<br>206<br>251<br>282 | 63<br>105<br>174<br>208<br>261 | 63<br>104<br>160<br>212<br>258 |

Examples 15-18 and Comparative Example G

In these examples various curing agents were formulated with Epikote® 1001 and cured. All of the compositions were based on the reaction product of the Mannich base Epilink® 230 with the amine N-oleyl-1,3-diaminopropane. The detailed compositions of the curing agent of each example are given below.

Example G - This is the control example using as a curing agent a 100% solids composition of the reaction product of the Mannich base Epilink® 230 with N-oleyl-1,3-diaminopropane. This curing agent composition falls within the broad disclosure of U.S. patent 4,269,742.

Example 15- To make this curing agent, the curing agent of Example G is adducted with the monoepoxide PGE and the diepoxide DX-235. The curing agent was then formulated as a solution in n-butanol with a solids content of 75%.

Example 16- To make this curing agent, the curing agent of Example G is adducted with the monoepoxide OCGE and the diepoxide DX-235. The curing agent was then formulated as a solution in n-butanol with a solids content of 75%.

Example 17- To make this curing agent, the curing agent of Example G is adducted with the monoepoxide ptBPGE and the diepoxide DX-235. The curing agent was then formulated as a solution in n-butanol with a solids content of 75%.

Example 18- To make this curing agent, the curing agent of Example G is adducted with the monoepoxide 2-EHGE and the diepoxide DX-235. The curing agent was then formulated as a solution in n-butanol with a solids content of 75%.

The results of the curing at 5°C and 90% relative humidity are given in Table 5.

TABLE 5

| Example | | G | 15 | 16 | 17 | 18 |
|---|---|---|---|---|---|---|
| Amine value Viscosity(Poise) | mgKOH/g | 603 | 329.8 | 318.7 | 316.6 | 319.2 |
| | at 25°C | 19.2 | 69.4 | 79.6 | 77.4 | 43.8 |
| | % Solids | 100 | 75 | 75 | 75 | 75 |
| | HEW | 128.3 | 306.8 | 312 | 317.7 | 319.1 |
| DRYING TIME | Flow time | 2.5 | 3 | 2.8 | 2.2 | 2 |
| | Gel time | 10 | 8.5 | 9 | 7.5 | 6.5 |
| | Tack time | 13 | 16 | 14 | 11.5 | 12 |
| | Hard dry | >24 | 20 | 17 | 16 | 18 |
| PERSOZ of 150μ film after: | | | | | | |
| | 1 day | 36 | 20 | 38 | 37 | 47 |
| | 2 days | 91 | --- | 106 | 100 | 125 |
| | 3 days | 211 | 154 | 139 | 143 | 168 |
| | 4 days | 230 | 179 | 158 | 165 | 182 |
| measured at 20°C | 7 days | 145 | 129 | 83 | 97 | 116 |
| + 1 day at 20°C | 8 days | 211 | 146 | 135 | 165 | 174 |
| PERSOZ of 225μ film after | | | | | | |
| | 1 day | 15 | 10 | 23 | 21 | 15 |
| | 2 days | 54 | 58 | 75 | 83 | 47 |
| | 3 days | 169 | 105 | 92 | 95 | 71 |
| | 4 days | 186 | 137 | 121 | 117 | 97 |
| measured at 20°C | 7 days | 153 | 93 | 25 | 68 | 57 |
| + 1 day at 20°C | 8 days | 202 | 107 | 97 | 108 | 97 |

The foregoing examples have been presented for the purpose of illustration and description only and are not to be construed as limiting the invention in any way. The scope of the invention is to be determined from the claims appended hereto.

## Claims

1. A process for making a low temperature hardener for curing epoxy resins which comprises the steps of:
A) reacting a Mannich base with a compound selected from the group consisting of (poly)-aminoamides, (poly)amines, (poly)aminoimidazolines, and (poly)aminoamides containing an imidazoline group, to form an amine compound reaction product which contains an average of more than two active hydrogen atoms per molecule, and
B) adducting the amine compound obtained from step (A) with a first compound which contains at least 1.5 reactive groups per molecule and with a second compound which contains 0.7-1.2 reactive groups per molecule, said first and second compounds being independently selected from the group consisting of compounds that contain as reactive groups, groups that can adduct with primary or secondary amine functionalities; with the proviso that the step of adducting with said second compound can be carried out prior to, concurrent with, or subsequent to said step of adducting with said first compound.

2. A process as claimed in claim 1 wherein in step (B) said compound which contains reactive groups that can adduct with primary or secondary amine functionalities is selected from the group consisting of (poly)epoxides, (poly)acrylates, (poly)methacrylates, free (poly)isocyanates and blocked (poly)-isocyanates.

3. A process as claimed in any one of claims 1-2 wherein the amine compound obtained from step (A) is first adducted with said first compound containing at least 1.5 reactive groups per molecule and then subsequently adducted with said second compound containing 0.7-1.2 reactive groups per molecule.

4. A process as claimed in any one of claims 1-2 wherein the amine compound obtained from step (A) is first adducted with said second compound containing 0.7-1.2 reactive groups per molecule and then subsequently adducted with said first compound containing at least 1.5 reactive groups per molecule.

5. A process as claimed in any one of claims 1-4 wherein in step (A), 0.7-1.5 moles of said compound are employed per amine equivalent in said Mannich base, and in step (B) said first compound is adducted with 0.8-1.6 moles of said amine compound from step (A) per reactive group in said first compound and said second compound is employed in an amount sufficient to provide 0.8-1.6 moles of said second compound per mole of the amine compound from step (A).

6. A process as claimed in any one of claims 1-5 which comprises the further step of:
   C) mixing the product of step (B) with a sufficient amount of at least one solvent to form a solution of the product of step (B) in the solvent.

7. A process as claimed in any one of claims 1-6 wherein one or both adduction reactions of step (B) are carried out in the presence of a solvent or a diluent for the first and/or second compound.

8. A process as claimed in any one of claims 1-7 wherein in step (A) said Mannich base is reacted with N-aminoethylpiperazine and the Mannich base itself is the reaction product of formaldehyde, a (poly)-phenol and a secondary amine and, and wherein said first compound employed in step (B) is an epoxide which contains at least 1.5 terminal 1,2-epoxy groups per molecule and said second compound employed in step (B) is an epoxide which contains 0.7-1.2 terminal 1,2-epoxide groups per molecule.

9. A low temperature hardening agent for the curing of epoxy resins which is the product of the process of any one of claims 1-8.

10. Use of the product of claim 9 as a hardening agent for the curing of epoxy resins.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | EP-A-0 003 479 (SCHERING AG.)<br><br>* claim 1 *<br>* page 12, line 35 - page 13, line 1 *<br>* page 12, line 23 *<br>--- | 1,2,6,7,<br>9,10 | C08G59/18<br>C08G59/62<br>C08L63/00 |
| A | EP-A-0 218 812 (VIANOVA KUNSTHARZ AG.)<br>* claim 1 *<br>--- | 1-10 | |
| A | EP-A-0 572 915 (AIR PRODUCTS AND CHEMICALS)<br>* claims 1,7 *<br>--- | 1-10 | |
| A | EP-A-0 080 165 (BASF)<br>* claim 1 *<br>--- | 1-10 | |
| A | EP-A-0 042 617 (HOECHST AG,)<br>* claim 1 *<br>----- | 1-10 | |

**TECHNICAL FIELDS SEARCHED** (Int.Cl.6)

C08G
C08L

The present search report has been drawn up for all claims

| Place of search | Date of completion of the search | Examiner |
|---|---|---|
| THE HAGUE | 9 November 1994 | O'Sullivan, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)